(19) Europäisches Patentamt
European Patent Office
Office européen des brevets

(11) Publication number: **0 330 155**
**A2**

(12) **EUROPEAN PATENT APPLICATION**

(21) Application number: **89103018.1**

(51) Int. Cl.4: **C08F 283/10 , C08G 59/06**

(22) Date of filing: **21.02.89**

(30) Priority: **26.02.88 US 160734**

(43) Date of publication of application:
**30.08.89 Bulletin 89/35**

(84) Designated Contracting States:
**AT BE CH DE ES FR GB IT LI NL SE**

(71) Applicant: **THE DOW CHEMICAL COMPANY**
**2030 Dow Center Abbott Road P.O. Box 1967**
**Midland Michigan 48640-1967(US)**

(72) Inventor: **Davis, Rhetta Q.**
**22 Bayou Road**
**Lake Jackson Texas 77566(US)**
Inventor: **Mizusawa, Anita E.**
**866 Clarewood Court**
**Concord California 94518(US)**
Inventor: **Naderhoff, Brian A.**
**780 Deedra Avenue**
**Pensacola Florida 32514(US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2(DE)**

(54) **Advanced epoxy resins containing in situ prepared addition polymers, process for preparation thereof and cured compositions containing same.**

(57) The present invention concerns the preparation of advanced epoxy resins containing in situ prepared addition polymers wherein said addition polymers are prepared in a relatively low equivalent weight epoxy resin and in the presence of a free radical initiator prior to advancing to a higher equivalent weight epoxy resin with a polyhydric phenolic compound or wherein as said addition polymers are prepared in the presence of an advanced epoxy resin in the presence of a free radical initiator.

EP 0 330 155 A2

Xerox Copy Centre

# ADVANCED EPOXY RESINS CONTAINING IN SITU PREPARED ADDITION POLYMERS, PROCESS FOR PREPARATION THEREOF AND CURED COMPOSITIONS CONTAINING SAME

The present invention is directed to the preparation of advanced epoxy resins containing addition polymers and to a method for the preparation of such compositions and to cured compositions thereof.

Evans et al discloses in US-A-4,308,185 the preparation of epoxy resins which contain in situ prepared addition polymers; however, such epoxy resins are modified such that they are substantially free of epoxy groups.

The present invention provides for the preparation of advanced epoxy resins containing in situ prepared addition polymers wherein the resultant product contains residual unreacted epoxy groups. The cured products of the present invention have an improvement in one or more of the physical properties thereof when compared to like products which are free of residual epoxy groups.

One aspect of the present invention pertains to an advanced epoxy resin which contains an in situ prepared addition polymer resulting from

(I) polymerizing at least one polymerizable ethylenically unsaturated monomer free of groups reactive with an epoxide group in at least one relatively low equivalent weight epoxy resin having an average of more than one vicinal epoxide group per molecule and an average epoxide equivalent weight of not greater than 400, in the presence of

(A) at least one free radical polymerization catalyst selected from

(1)one or more peroxide compounds in an amount of not greater than the equivalent of 2.75 percent by weight of benzoyl peroxide based on the weight of the polymerizable monomer or combination of monomers; or

(2)one or more azo compounds in an amount of from 0.1 to 10 percent by weight based on the weight of the polymerizable monomer or combination of monomers; and

(B) optionally at least one of

(1)a compound which contains both a group reactive with an epoxy group and a polymerizable ethylenically unsaturated group in an amount of from 0.5 to not more than 7.5 percent by weight based upon the combined weight of said compound containing both a group reactive with an epoxy group and a polymerizable ethylenically unsaturated group and said polymerizable ethylenically unsaturated monomer free of groups reactive with an epoxide group; or

(2) an adduct of (a) a relatively low equivalent weight epoxy resin and (b) a compound which contains both a group reactive with a relatively low equivalent weight epoxy resin and a polymerizable ethylenically unsaturated group, components (a) and (b) being employed in an amount such that the ratio of epoxy groups contained in component (a) to groups reactive with an epoxy group contained in component (b) is from 1:1 to 100:1, said adduct being employed in an amount of from 0.5 to 20 percent by weight of said polymerizable ethylenically unsaturated monomer free of groups reactive with an epoxide group with the proviso that the amount of compound containing both a polymerizable ethylenically unsaturated group and a group reactive with an epoxide group is not greater than 7.5 percent by weight based on the combined weight of such compound and any polymerizable monomer free of groups reactive with an epoxide group; and

(II) reacting the resultant composition with a compound having an average of more than one phenolic hydroxyl group per molecule in a quantity which provides an epoxy:hydroxyl ratio of from 1.2:1 to 2.5:1 so as to provide a resultant advanced epoxy resin containing an addition polymer.

Another aspect of the present invention pertains to a process for preparing advanced epoxy resins containing addition polymer which process comprises

(I) polymerizing at least one polymerizable ethylenically unsaturated monomer free of groups reactive with an epoxide group in at least one epoxy resin having an average of more than one vicinal epoxide group per molecule and an average epoxide equivalent weight of not greater than 400, in the presence of

(A) at least one free radical polymerization catalyst selected from

(1)one or more peroxide compounds in an amount of not greater than the equivalent of 2.75 percent by weight of benzoyl peroxide based on the weight of the polymerizable monomer or combination of monomers; or

(2)one or more azo compounds in an amount of from 0.1 to 10 percent by weight based on the weight of the polymerizable monomer or combination of monomers; and

(B) optionally, at least one of

(1)a compound which contains both a group reactive with an epoxy group and a polymerizable ethylenically unsaturated group in an amount of from 0.5 to not more than 7.5 percent by weight based upon the combined weight of said compound containing both a group reactive with an epoxy group and a polymerizable ethylenically unsaturated group and said polymerizable ethylenically unsaturated monomer free of groups reactive with an epoxide group; or

(2)an adduct of (a) a relatively low equivalent epoxy resin and (b) a compound which contains both a group reactive with a relatively low equivalent weight epoxy resin and a polymerizable ethylenically unsaturated group, components (a) and (b) being employed in an amount such that the ratio of epoxy groups contained in component (a) to groups reactive with an epoxy group contained in component (b) is from 1:1 to 100:1, said adduct being employed in an amount of from 0.5 to 20 percent by weight of said polymerizable ethylenically unsaturated monomer free of groups reactive with an epoxide group with the proviso that the amount of compound containing both a polymerizable ethylenically unsaturated group and a group reactive with an epoxide group is not greater than 7.5 percent by weight based on the combined weight of such compound and any polymerizable monomer free of groups reactive with an epoxide group; and

(II) reacting the resultant composition with a compound having an average of more than one phenolic hydroxyl group per molecule in a quantity which provides an epoxy:hydroxyl ratio of from 1.2:1 to 2.5:1 so as to provide a resultant advanced epoxy resin containing an addition polymer.

Another aspect of the present invention concerns products resulting from curing the aforementioned epoxy resin compositions containing in situ prepared addition polymer with an effective quantity of a suitable curing agent or mixture of curing agents.

Suitable low equivalent weight epoxy resins include, for example, glycidyl ethers of polyhydric aromatic compounds, and mixtures thereof. These epoxy resins suitably have equivalent weights of from not greater than 400, suitably from 170 to 250. The equivalent weight being calculated on the basis that there are no substituent groups attached to the aromatic rings other than hydrogen or the ether oxygen atoms even if the resins do in fact contain such substituent groups including, but not limited to, hydrocarbyl or hydrocarbyloxy groups or halogen atoms such as for example, chlorine or bromine.

Particularly suitable are the. glycidyl ethers of polyhydric aromatic compounds such as phenols, bisphenols and phenol-aldehyde resins.

Most particularly suitable low equivalent weight epoxy resins which can be employed herein include those represented by the formulas:

(I)

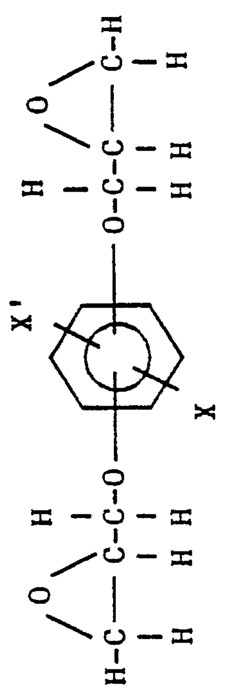

(II)

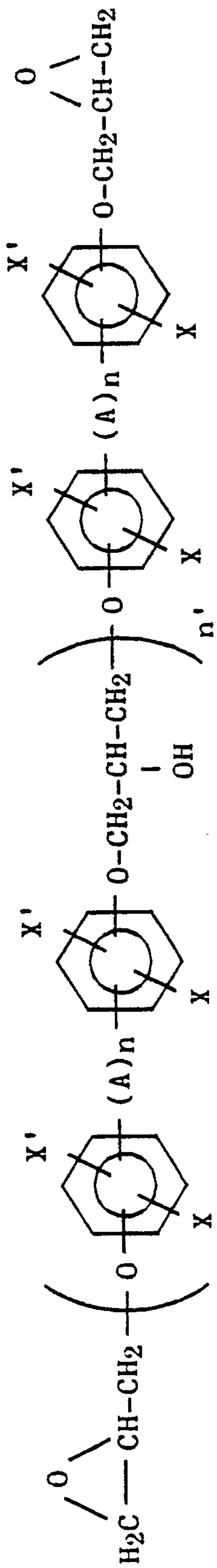

(III)

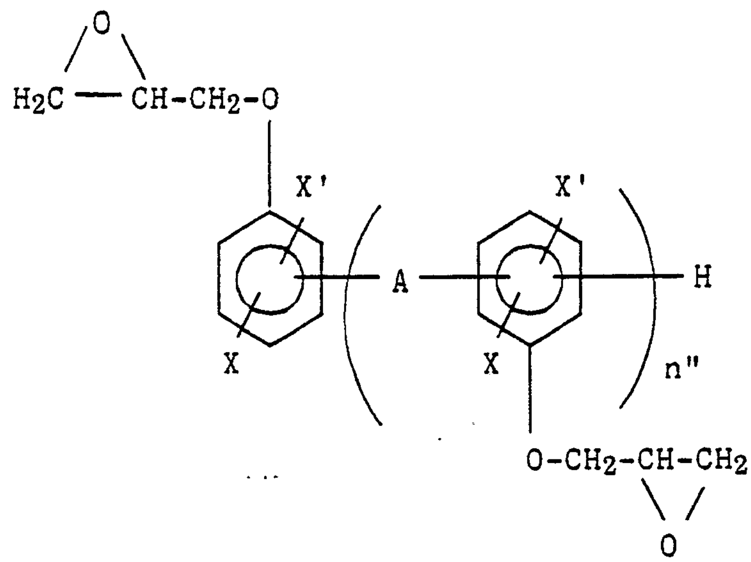

wherein A is a divalent hydrocarbon group having from one to 8 carbon atoms, -O-, -S-, -S-S-,

$$-\overset{\overset{O}{\|}}{S}-,\quad -\overset{\overset{O}{\|}}{\underset{\underset{O}{\|}}{S}}-\quad \text{or}\quad -\overset{\overset{O}{\|}}{C}-;$$

each X and X′ is independently hydrogen, bromine, chlorine or a hydrocarbon group having from 1 to 8 carbon atoms; n has a value of zero or 1; n′ has an average value of up to 2, and n″ has a value of from 1.001 up to a value which does not cause gelation of the advanced product, preferably from 0.1 to 2.5.

Suitable compounds having an average of more than one phenolic hydroxyl group per molecule include those represented by the formulas:

(IV)

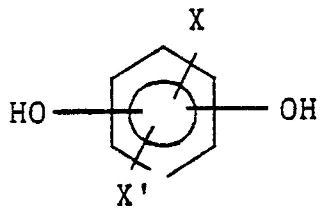

(V)

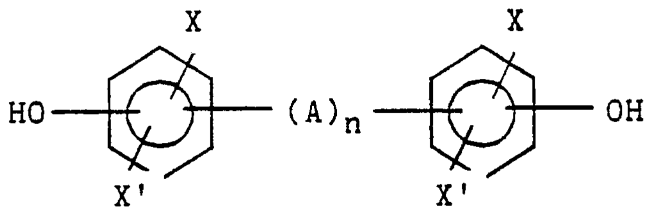

(VI)

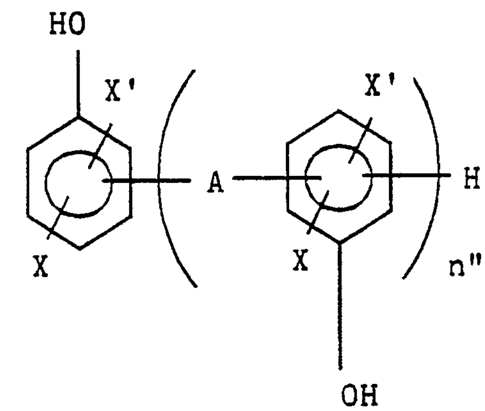

wherein A, X, X′, n and n″ are as defined above.

Suitable advancement catalysts which can be employed in the process of the present invention include any catalyst which will catalyze the reaction between a vicinal epoxy group and a phenolic hydroxyl group. Such catalysts include, for example, those disclosed in U.S. Patent Nos. 3,306,872; 3,341,580; 3,379,684; 3,477,990; 3,547,881; 3,637,590; 3,843,605; 3,948,855; 3,956,237; 4,048,141; 4,093,650; 4,131,633; 4,132,706; 4,171,420; and 4,177,216.

Particularly suitable catalysts are those quaternary phosphonium and ammonium compounds such as, for example, ethyltriphenylphosphonium chloride, ethyltriphenylphosphonium bromide, ethyltriphenylphosphonium iodide, ethyltriphenylphosphonium acetate, ethyltriphenylphosphonium diacetate (ethyltriphenylphosphonium acetate•acetic acid complex), ethyltriphenylphosphonium phosphate, tetrabutylphosphonium chloride, tetrabutyl-phosphonium bromide, tetrabutylphosphonium iodide, tetrabutylphosphonium acetate, tetrabutylphosphonium diacetate (tetrabutylphosphonium acetate•acetic acid complex), butyltriphenylphosphonium tetrabromobisphenate, butyltriphenylphosphonium bisphenate, butyltriphenylphosphonium bicarbonate, benzyltrimethylammonium chloride and tetramethylammonium hydroxide.

The quantities of epoxy resin and hydroxyl-containing compounds employed herein are that required to obtain the desired molecular weight and are usually employed in such quantities as will provide an epoxide:hydroxyl ratio of from about 1.2:1 to 2.5:1, preferably from 1.2:1 to 2.0:1.

The quantity of advancement catalyst employed depends upon the particular reactants and catalyst being utilized and is usually in the range of from 0.02 to 2 millimoles, preferably from 0.1 to 1 millimoles per equivalent of the epoxide reactant.

Higher quantities of catalyst are usually desired when higher molecular weight products are to be prepared.

The temperature at which the epoxy-phenolic hydroxyl reaction can be conducted depends upon the particular reactants and catalysts employed but usually ranges from 120° C to 220° C, preferably from 150° C to 200° C.

The higher the temperature and the higher the concentration of catalyst, the less time that is required for the reaction to reach a specific degree of completion with a specific combination of reactants.

Any compound containing a polymerizable ethylenically unsaturated group can be employed herein.

Suitable polymerizable ethylenically unsaturated monomers which can be employed herein include, for example, those represented by the following formulas VII and VIII

(VII)

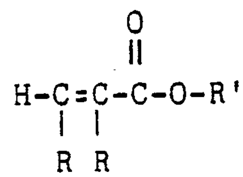

(VIII)

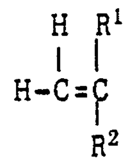

wherein each R is independently hydrogen or a hydrocarbyl group having from 1 to 20, preferably from 1 to 10 carbon atoms; R′ is a hydrocarbyl group having from 1 to 20 carbon atoms; $R^1$ is hydrogen, halogen or a hydrocarbyl group having from 1 to 20, preferably from 1 to 10, carbon atoms and $R^2$ is hydrogen, halogen or a hydrocarbyl group having from 1 to 20, preferably from 1 to 10 carbon atoms, preferably at least one of $R^1$ and $R^2$ is hydrogen or a methyl group. Additionally, $R^2$ can contain a -C≡N group.

Particularly suitable monomers include, for example, α-methyl styrene, 2-methyl styrene, 4-methyl styrene, 4-methoxystyrene, 4-phenyl styrene, 3-phenyl-1-propene, 2-chloro styrene, 4-chloro styrene, vinyl cyclopentane, vinyl cyclohexane, vinyl naphthalene, vinyl methyl ether, vinyl ethyl ether, vinyl propyl ether, vinyl isopropyl ether, vinyl butyl ether, vinyl isobutyl ether, vinyl sec-butyl ether, vinyl tert. butyl ether, vinyl hexyl ether, vinyl octyl ether, vinyl methyl ketone, methyl isopropenyl ketone, vinyl formate, vinyl acetate, vinyl propionate, vinyl chloroacetate, vinyl trifluoroacetate, vinyl benzoate, 2-vinyl pyridine, vinyl pyrrolidone, vinyl carbazole, methyl acrylate, ethyl acrylate, propyl acrylate, isopropyl acrylate, butyl acrylate, isobutyl acrylate, sec butyl acrylate, tert butyl acrylate, 2-ethylhexyl acrylate, 2-hydroxyethyl acrylate, 2-hydroxy propylacrylate, methyl methacrylate, ethyl methacrylate, propyl methacrylate, isopropyl methacrylate, butyl methacrylate, isobutyl methacrylate, sec butyl methacrylate, tert butyl methacrylate, 2-ethyl butyl methacrylate, 2-hydroxyethyl methacrylate, 2-hydroxypropyl methacrylate, hexyl methacrylate, octyl methacrylate, dodecyl methacrylate, 2-hydroxybutyl methacrylate, octadecyl methacrylate, phenyl methacrylate, benzyl methacrylate, cyclo hexyl methacrylate, methyl chloro acrylate, acrylonitrile, methacrylonitrile, butadiene, vinyl chloride, vinylidene chloride, ethylene, cinnamic acid derivatives, maleic acid derivatives, and mixtures thereof.

The ethylenically unsaturated monomers are employed in quantities of from 5 to 75, preferably from 25 to 60, most preferably from 30 to 50 percent by weight based upon the final weight of the advanced epoxy resin containing in situ prepared addition polymers.

Suitable free radical initiators which can be employed herein include azo compounds and organic peroxide compounds.

Suitable azo compounds include those represented by the formula R-N=N-R′ wherein each R and R′ is

independently hydrogen, alkyl, alkoxy or aryl groups having from 1 to 15 carbon atoms, preferably from 4 to 8 carbon atoms which groups may contain a -CXN moiety. Particularly suitable azo compounds include, for example, 1-t-butylazo-1-cyanocyclohexane, 2-t-butylazo-2-methoxy-4-methyl pentane, 2-t-butylazo-2-cyanopropane, 2-t-butylazo-2-cyanobutane, 2-t-butylazo-2-cyano-4-methyl pentane, 2-t-butylazo-2-cyano-4-methoxy-4-methyl pentane, 2,2′-azobis(2,4-dimethylvaleronitrile), 1,1′-azobis(cyclohexane carbonitrile), 2,2′-azobis(2,4- dimethyl-4-methoxyvaleronitrile), and 2,2′-azobis(2-methylbutyronitrile), 2,2′-azobisisobutyronitrile, and mixtures thereof.

Suitable organic peroxide compounds include those represented by the formula R-O-O-R′ or ROO(CO)-R′ wherein each R and R′ is independently hydrogen, alkyl or aryl groups having from 1 to 15, preferably from 1 to 8, carbon atoms. Particularly suitable organic peroxides include, for example, cumene hydroperoxide, dicumyl peroxide, t-butyl perbenzoate, t-butyl peroctoate, di-t-butyl peroxide, t-butyl hydroperoxide, lauroyl peroxide, methyl ethyl ketone peroxide, benzoyl peroxide and chlorobenzoyl peroxide, and mixtures thereof.

The quantity of free radical polymerization catalyst which is employed depends upon the particular monomer or combination of monomers and catalyst being utilized. When the catalyst is a peroxide compound or a combination of such compounds, it or they are employed in an amount which corresponds to that which is equivalent to not greater than 2.75, preferably not greater than 2.5 percent by weight benzoyl peroxide. Since a peroxide compound provides two (2) free radicals per molecule, 2.75 percent corresponds to 0.0227 (2.75÷121) and 2.5 percent corresponds to 0.0207 (2.5÷121) free radicals per 100 grams of polymerizable ethylenically unsaturated monomer. When the catalyst is an azo compound or a mixture of such compounds, it or they are usually employed in the range of from 0.1 to 10, preferably 0.5 to 8 percent by weight based upon the weight of the monomer or combination of monomers. Based upon equivalents with the azo compound providing two (2) free radicals per molecule, the azo catalysts are employed in amounts which provide from 0.00169 to 0.170, preferably from 0.00847 to 0.136 free radical equivalents per 100 grams of polymerizable ethylenically unsaturated monomer.

The polymerization of the monomer is conducted at a temperature of from 80° to 220°C, preferably from 100° to 180°C.

Several factors affect the molecular weight of the addition polymer, such as the polymerization temperature and the initiator level. The addition polymer molecular weight can be effectively lowered through the use of chain transfer agents, such as, for example, halogenated solvents, and mercaptans without using higher levels of the expensive free radical initiators and without changing the reaction temperature. Ethylene dichloride, ethylene dibromide, tetrachloroethane, carbon tetrachloride, carbon tetrabromide, bromoform, chloroform, n-butyl mercaptan, dodecyl mercaptan and the like are effective chain transfer agents. Use of volatile chain transfer agents may necessitate the use of a vacuum strip step in the process.

If desired, a stabilizer compound, one which is capable of reacting with a vicinal epoxy group and/or a phenolic hydroxyl group and a vinyl group can be employed in the present invention.

If desired, the stabilizer compounds can be prereacted with any relatively low equivalent weight epoxy resin in any equivalent ratios of epoxy resin to stabilizer compound, preferably such that not more than 1/2 of the epoxy groups are reacted.

Suitable such stabilizer compounds include, for example, acrylic acid, methacrylic acid, acrylamide, hydroxyethyl or hydroxypropyl acrylate, vinyl phenol, isopropenylphenol, isopropenylphenol glycidyl ether, carboxy terminated butadiene-acrylonitrile copolymers, cinnamic acid, maleic acid, glycidyl methacrylate, or styryl glycidyl ether, diglycidyl ether of bisphenol A, mono- or dimethacrylate, and mixtures thereof. Also suitable as stabilizer compounds are the acrylate or methacrylate esters of ethoxylated or propoxylated bisphenol A as well as acrylate or methacrylate esters of the glycidyl ether of tert-butyl phenol or nonylphenol. Such stabilizer compound can be employed in quantities up to 20 percent by weight of the amount of polymerizable ethylenically unsaturated monomers employed, but preferably not greater than 10 percent by weight with the proviso that the amount of compound containing both a polymerizable ethylenically unsaturated group and a group reactive with an epoxide group is not greater than 7.5 percent by weight based on the combined weight of such compound and any polymerizable monomer free of groups reactive with an epoxide group.

Suitable curing agents which can be employed herein include those well recognized in the art such as carboxylic acids and anhydrides, primary amines, secondary amines, tertiary amines, biguanides, phenolic hydroxyl-containing compounds, isocyanates, isothiocyanates, amides, imides, and mixtures thereof. Such curing agents are described in HANDBOOK OF EPOXY RESINS by Lee and Neville, 1967, McGraw-Hill.

The compositions of the present invention can be employed to prepare powder coatings, solution coatings, body solders, transfer molding resins, caulking compounds, coil coatings, casting compounds,

electrical laminates, potting and encapsulation compounds, adhesives, filament wound structures, carbon fiber composites and the like.

If desired, solvents, fillers, pigments, flow control agents, dyes, fire suppressants and other additives can be employed.

The following examples are illustrative of the present invention.

EXAMPLE 1 (40 PERCENT STYRENE)

To a 1000 ml reaction vessel equipped with a stirrer, nitrogen purge, condenser, and temperature controller was added 300 g (1.65 epoxy equivalents) of a diglycidyl ether of bisphenol A having an average EEW of 182. While stirring and purging with nitrogen, the temperature was raised to 120 °C over a period of 30-50 minutes after which the dropwise addition of a mixture containing 275.8 g (2.65 moles) of styrene and 8.28 g of azobisisobutyronitrile was begun by means of an addition funnel. This mixture was added over a period of 2 hours at a rate of 2.5 ml/min. while maintaining the temperature at 120-125 °C. After completion of the monomer addition, the contents of the reaction vessel was maintained at 120 °C for one hour after which 113.8 g (0.998 equiv.) of bisphenol A was added. When the contents of the reaction vessel had cooled to 100 °C, 0.5 g of a 70 percent solution of ethyl triphenylphosphonium acetate•acetic acid complex in methanol was added. The contents were heated and when 150 °C was reached, heating was discontinued and the contents allowed to exotherm. The exotherm temperature was 175-195 °C after which the contents were maintained at 175 °C for one hour. The resultant product had an average EEW of 1067 and the resultant product had an ICI plate viscosity of 840 cps at 200 °C containing an epoxy resin having an average calculated EEW of 640. At one hour past the completion of the monomer addition, the product contained 6.89 weight percent styrene monomer and one hour after the peak exotherm temperature, the product had a styrene monomer content of 1.25 percent.

EXAMPLE 2 (40 PERCENT STYRENE)

To a reaction vessel equipped as in Example 1 was added 300 g (1.65 equiv.) of a diglycidyl ether of bisphenol A having an average EEW of 182. The temperature was raised to 120 °C over a period of 30 minutes after which a mixture of 266.7 g (2.56 moles styrene and 8 g of azobisisobutyronitrile was added over a period of 2 hours at a rate of 2 ml/min. After completion of the monomer addition, the contents were maintained at 120 °C for one hour followed by the addition of 100 g (0.877 equiv.) of bisphenol A. When the temperature had cooled to 100 °C, 0.5 g of a 70 percent solution of ethyl triphenylphosphonium acetate•acetic acid complex in methanol was added. The reaction mixture was heated to 150 °C after which it exothermed to a temperature of 180 °C. The temperature was then maintained at 175 °C for one hour. The resultant product had an ICI plate cone viscosity of 500 cps at 200 °C and had an average EEW of 861 containing an advanced epoxy resin having an average calculated EEW of 516.

EXAMPLE 3 (50 PERCENT STYRENE)

A product was prepared employing the procedure of Example 2 except that the monomer mixture employed was 400 g (3.84 moles) of styrene and 12 g of azobisisobutyronitrile and was added over a period of 3 hours at a rate of 2-2.5 ml/min. The resultant product had an ICI plate cone viscosity of 800 cps at 200 °C and had an average EEW of 998 containing an advanced epoxy resin having an average calculated EEW of 499.

EXAMPLE 4 (20 PERCENT STYRENE-ACRYLONITRILE)

To a vessel equipped as in Example 1 containing 300 g (1.65 equiv.) of a diglycidyl ether of bisphenol A having an average EEW of 182 heated to a temperature of 120 °C over a period of 30 minutes was added a mixture containing 51.7 g (0.496 moles) of styrene, 51.7 g (0.974 moles) of acrylonitrile, 1 g of acrylic acid and 3.1 g of azobisisobutyronitrile. The monomer mixture was added over a period of 1 hour at a rate of 2 ml/min. while maintaining the temperature at 120 °-125 °C. After maintaining the temperature at 120 °C for 1 hour past completion of monomer addition, 113.8 g (0.998 equiv.) of bisphenol A was added. After cooling

the mixture to 100 °C, 0.5 g of a 70 percent solution of ethyl triphenylphosphonium acetate•acetic acid complex in methanol was added. The temperature was raised to a temperature of 150 °C over a 30 minute period and the mixture was allowed to exotherm to a temperature of 165-195 °C. After the peak exotherm was reached, the temperature was maintained at 195 °C for one hour. The resultant product had an ICI plate cone viscosity of 470 cps at 200 °C and had an average EEW of 829 containing an advanced epoxy resin having an average calculated EEW of 664.

COMPARATIVE EXPERIMENT A

(PHYSICAL BLEND OF THERMOPLASTIC STYRENE-ACRYLONITRILE WITH EPOXY)

Styrene-acrylonitrile (SAN) polymer, 225 g, was dry blended with 675 g of a diglycidyl ether of bisphenol A having an equivalent weight of 700 and processed through a Buss Condex PLK-46 extruder. The SAN and the epoxy resin had such different melt temperatures that a homogeneous mixture was not obtained. Instead a mixture of solid SAN coated with liquified epoxy resin was obtained. Varying the temperatures of the two mix zones in the extruder did not result in a homogeneous product. The first set of extruder conditions was 50 °C for the first zone and 100 °C for the second zone. The second set of conditions was 80 °C/100 °C (first/second zones). The screw speed was varied with higher speed and higher shear; then lower speed with a longer dwell time in the extruder, but a compatible blend was still not attainable. Also the SAN was charged to the extruder for premelting prior to adding the epoxy, but variations in the blending process did not result in a homogeneous mixture.

EXAMPLE 5 (20 PERCENT STYRENE BY BULK POLYMERIZATION IN CHLORINATED SOLVENT)

To a reaction vessel equipped as in Example 1 was added 300 g (1.65 equiv.) of a diglycidyl ether of bisphenol A having an average EEW of 182, 100 g (0.96 moles) styrene and 20 g of ethylene dichloride. The mixture was heated to 55 °C over a period of 40 minutes after which the dropwise addition of a solution of 3 grams of azobisisobutyronitrile in 20 grams of ethylene dichloride was at a rate of 0.5 ml/min. while maintaining the temperature at 50 °-55 °C. The addition was stopped after 40 minutes and the temperature was raised to 120 °C over a period of 40 minutes. The addition of the catalyst was completed at a rate of 2 ml/min. After completion of the addition the contents were maintained at 120 °C for 1 hour at which time 113.8 g (0.998 equiv.) of bisphenol A was added. After cooling to 100 °C, 0.5 g of a 70 percent solution of ethyl triphenylphosphonium acetate•acetic acid complex in methanol was added. The temperature was raised to 150 °C and the contents allowed to exotherm at 175 °-195 °C. The ethylene dichloride was then removed under vacuum. The resultant product has an ICI plate cone viscosity of 360 cps at 200 °C and had an average EEW of 793 containing an advanced epoxy resin portion having an average calculated EEW of 634.

EXAMPLE 6 (20 PERCENT STYRENE)

A reaction vessel equipped as in Example 1 containing 300 grams (1.65 equiv.) of a diglycidyl ether of bisphenol A having an average EEW of 182 was heated to 120 °C. A solution containing 100 g (0.96 moles) of styrene, 3 g of azobisisobutyronitrile and 2 g of acrylic acid was added over a period of 50 minutes at a rate of 2 ml/min. After maintaining the temperature at 120 °C for one hour after completion of the monomer addition, 100 g (0.877 equiv.) of bisphenol A was added and after cooling to 100 °C, 0.5 g of a 70 percent solution of ethyl triphenylphosphonium acetate•acetic acid complex in methanol was added. After heating to 150 °C the contents were allowed to exotherm to a temperature of 175 °-195 °C. The temperature was maintained at 175 °C for 1 hour. The contents were cooled to 150 °C and 166.7 g of methyl ethyl ketone was added over a period of 10 minutes. The resultant product had a Gardner viscosity of Z1, a Gardner color of 1, contained 75.9 percent non-volatiles and had an average EEW of 884 containing an advanced epoxy resin having an average calculated EEW of 537.

EXAMPLE 7

A decorative powder coating was prepared from an epoxy resin containing 40 percent polystyrene which was prepared in a manner similar to Example 2. Powder coatings were prepared by melt mixing the components shown in the following Table on a two roll mill at 110° C (230° F). The resin and filler was melt mixed until homogenous and then the curing agent was melt mixed for 5 minutes. The melt mix was cooled, flaked, and ground using an Alpine pin disc grinder. The powder was then sieved through 140 mesh sieves. The powders were then electrostatically sprayed onto 20 gauge cold rolled steel panels and then cured for 10 minutes at 200° C. The panels were then cooled and the coating thickness was measured. A thickness of (0.0038-0.051 cm) 1.5-2.0 mils was used for testing. The results are given in the following Table.

TABLE

| | |
|---|---|
| EPOXY RESIN prepared in Ex. 2, g | 387.5 |
| CURING AGENT*, g | 112.5 |
| $TiO_2$, g | 333 |
| 60° Gloss, % | 46 |
| YELLOWNESS INDEX | 4.7 |
| IMPACT | |
| forward, in-lb | >140 |
| J | 15.82 |
| reverse, in-lb | >100 |
| J | 11.3 |
| Tg, °C | 94 |
| GEL TIME, sec @ 200° C | 45 |

*The curing agent was a phenolic curing agent having a phenolic hydroxyl equivalent weight of 250 commercially available from The Dow Chemical Company as D.E.H.® 84.

EXAMPLE 8 (50 PERCENT STYRENE)

To a reaction vessel equipped as in Example 1 was added 300 g (1.65 equiv.) of a diglycidyl ether of bisphenol A having an average EEW of 182 and 100 g (0.877 equiv.) of bisphenol A. The temperature was raised to 80°C over a period of 15 minutes and 0.5 g of a 70 percent solution of ethyl triphenyl phosphonium acetate•acetic acid complex in methanol was added. The temperature was then raised to 150°C over a period of 15 minutes and the reaction mixture was allowed to exotherm to 205°C. After holding the temperature at 175°C for 40 minutes the reaction was allowed to cool to 140°C after which a mixture of 400 g (3.84 moles) styrene, 20 g (0.141 moles) glycidyl methacrylate, 6.81 g (0.041 moles) 2-t-butylazo-2-cyanobutane, and 21.3 g (0.084 moles) bromoform were added over a period of 3 hours and 10 minutes at a rate of 2.0-2.5 ml/min. After completion of the monomer addition, the contents were maintained at 140°C for 1 hour after which the temperature was raised to 175°C. The temperature was then maintained at 175°C for 30 minutes. The resultant product had an ICI plate cone viscosity of 400 cps at 200°C and had an overall average EEW of 1039 containing an advanced epoxy resin having an average EEW of 503.

EXAMPLE 9 (20 PERCENT STYRENE/2-ETHYLHEXYL ACRYLATE)

To a vessel equipped as in Example 1 containing 300 g (1.65 equiv.) of a diglycidyl ether of bisphenol A having an average EEW of 182 heated to 120°C over a period of 25 minutes was added a mixture containing 54.2 g (0.520 moles) of styrene, 49.2 g (0.267 moles) of 2-ethylhexyl acrylate, 1 g of acrylic acid,

and 3.1 g of azobisisobutyronitrile. The monomer mixture was added over a period of 1 hour at a rate of 2 ml/min. while maintaining the temperature at 120-125° C. After maintaining the temperature at 120° C for 1 hour past the completion of the monomer addition, 113.8 g (0.998 equiv.) of bisphenol A was added. After cooling the mixture to 98° C, 0.5 g of a 70 percent solution of ethyl triphenyl phosphonium acetate•acetic acid complex in methanol was added. The temperature was raised to 150° C and the mixture was allowed to exotherm to a temperature of 165-200° C. After the peak exotherm was reached, the temperature was maintained at 175° C for one hour. The resultant product had an ICI plate cone viscosity of 300 cps at 200° C and had an average EEW of 833 and contained an epoxy resin with an average calculated EEW of 666.

EXAMPLE 10 (40 PERCENT STYRENE WITH ACRYLIC ACID STABILIZER)

To a reaction vessel equipped as in Example 1 containing 300 g (1.65 equiv.) of a diglycidyl ether of bisphenol A having an average EEW of 182 heated to 120° C over a period of 24 min. was added a mixture of 266.7 g (2.56 moles) of styrene, 1.33 g of acrylic acid, and 8.0 g of azobisisobutyronitrile. The monomer mixture was added over a period of 2.25 hours at a temperature of 120-125° C and at a rate of 2 ml/min. After maintaining the temperature at 120° C for 1 hour past the completion of the monomer addition, 100 g (0.877 equiv.) of bisphenol A was added. After cooling the mixture to 100° C, 0.5 g of a 70 percent solution of ethyl triphenyl phosphonium acetate•acetic acid complex in methanol was added. The temperature was raised to 150° C and the mixture was allowed to exotherm to a temperature of 165-200° C. After the peak exotherm was reached, the temperature was maintained at 195° C for one hour. The resultant product had an ICI plate cone viscosity of 595 cps at 200° C and an average EEW of 913 and contained an epoxy resin with an average calculated EEW of 548.

EXAMPLE 11 STABILIZER OF ACRYLATE-tBP EPOXY/40 PERCENT STYRENE)

To a reaction vessel equipped with a nitrogen purge, a condenser, a stirrer, and a temperature controller, was charged 187.5 g (1 equiv.) of the diglycidyl ether of bisphenol A. The contents were heated to 150° C. Then, a solution containing 11.54 g (0.0415 mole) of the acrylic acid ester of the glycidyl ether of tert-butylphenol, 26.48 g (0.02546 mole) of styrene, and 0.52 g of tert-butylperbenzoate was added dropwise over 5-10 minutes. Then, a solution containing 123.5 g (1.1875 moles) styrene and 2.48 g tert-butylperbenzoate was added dropwise over a period of 60 minutes. The contents were then digested for an additional 60 minutes at 150° C. Then, bisphenol A, 50.9 g (0.4465 equiv.) and 0.31 g of a 70 percent solution of ethyltriphenylphosphonium acetate•acetic acid complex in methanol was added. After heating to 150° C, the reaction was allowed to exotherm, then the reactor contents were held at 175° C for one hour past peak exotherm. The resultant resin was formulated into a powder coating with the following composition: 492 g resin, 10 g dicyandiamide, 5.9 g of a curing agent composed of 82 percent dicyandiamide, 17 percent 2-methylimidazole, and 1 percent fumed silica, and 6.18 g Modaflow™ II, a flow control additive from Monsanto Co. A 2 mil coating was cured onto Bonderite™ 37 metal for 10 minutes at 180° C. It had a 60 degree gloss of 100 percent and a forward and reverse impact of approximately 40 inch-pounds (4.52 joules) as measured by a Gardner Impact tester.

EXAMPLE 12 (40 PERCENT STYRENE/AA-tBP EPOXY STABILIZER)

To a reaction vessel equipped with a nitrogen purge, a condenser, a stirrer, and a temperature controller was charged 187.5 g (1 equiv.) diglycidyl ether of bisphenol A. After heating to 150° C, a solution containing 5.77 g (0.0208 mole) of the acrylic acid ester of the glycidyl ether of tert-butylphenol, 13.24 g (0.1273 mole) of styrene, and 0.52 g of tert-butylperbenzoate was added dropwise over 5-10 minutes. Then a solution containing 136.8 g (1.3154 moles) styrene and 2.74 g tert-butylperbenzoate was added dropwise over a period of 60 minutes. The contents were then digested for an additional 60 minutes at 150° C. Then, 50.9 g (0.4465 equiv.) of bisphenol A, and 0.31 g of a 70 percent solution of ethyltriphenylphosphonium acetate•acetic acid complex in methanol was added. After heating to 150° C, the reaction was allowed to exotherm, then the reactor contents were held at 175° C for one hour past peak exotherm. The resultant resin was formulated into a powder coating with the following composition: 492 g resin, 10 g dicyandiamide, 5.9 g of a curing agent composed of 82 percent dicyandiamide, 17 percent 2-methylimidazole, and 1

percent fumed silica, and 6.18 g Modaflow II, a flow control additive from Monsanto Co. A 2 mil coating was cured onto Bonderite 37 metal for 10 minutes at 180° C. It had a 60 degree gloss of 100 percent and a forward and reverse impact of approximately 40 inch-pounds (4.52 joules) as measured by a Gardner Impact tester.

EXAMPLE 13 (EPOXY ACRYLATE STABILIZER)

To a reaction vessel equipped with an air purge, a stirrer, a condenser, and a temperature controller was added 500 g (2.78 equiv.) of a diglycidyl ether of bisphenol A having an average EEW of 180 and 50 g (0.69 mole) acrylic acid. The mixture was heated to 90° C and 0.5 g of a 70 percent solution of ethyltriphenylphosphonium acetate•acetic acid complex in methanol was added. The mixture was then heated to 120° C and held for one hour. The resultant product had an average EEW of 243.

EXAMPLE 14 (50 PERCENT STYRENE/HYDROXYETHYL ACRYLATE WITH EPOXY ACRYLATE STABILIZER)

To a two-liter reaction vessel equipped with a nitrogen purge, a stirrer, condenser, and temperature controller was added 500 g (2.78 equiv.) of a diglycidyl ether of bisphenol A having an average EEW of 180 and 166.7 g (1.46 equiv.) of bisphenol A. The temperature was raised to 85° C over a period of 18 minutes and 0.83 g of a 70 percent solution of ethyltriphenylphosphonium acetate•acetic acid complex in methanol was added. The reaction mixture was heated to 150° C after which it exothermed to 200° C. The reaction mixture was then allowed to cool to 150° C after which a mixture of 600 g (5.76 moles) styrene, 71.7 g (0.62 mole) 2-hydroxyethylacrylate, 47.7 g (0.246 mole) tert-butylperbenzoate, 12 g (0.036 mole) carbon tetrabromide, and 66 g of the epoxy acrylate stabilizer of Example 13 was added over a period of 4.5 hours at a rate of 3 ml/min. after completion of the monomer addition, the temperature was held at 175° C for one hour. The resultant product had an ICI plate cone viscosity of 540 cps at 200° C and an average EEW of 1183.

EXAMPLE 15 (EPOXY ACRYLATE STABILIZER)

301.5 g (1.675 equiv.) diglycidyl ether of bisphenol A, 30 g (0.349 mole) methacrylic acid and 0.02 g hydroquinone was charged to a reaction flask equipped with stirring, air purge, condenser, and a temperature controller. The mixture was heated to 80° C and 0.25 g of a 70 percent solution of ethyltriphenylphosphonium acetate•acetic acid complex in methanol was added. After heating to 115° C, the contents were held until the percent acid fell to about zero.

EXAMPLE 16 (50 PERCENT STYRENE WITH EPOXY-METHACRYLATE STABILIZER)

500 g (1.25 equiv.) of a diglycidyl ether of bisphenol A and 33.15 g of the epoxy methacrylate stabilizer made in Example 15 was charged a reaction vessel equipped with stirring, nitrogen purge, condenser, and a temperature controller. After heating to 150° C, monomer feed consisting of 333 (3.20 mole) styrene and 7 g tert-butylperbenzoate was added dropwise over a period of 80 minutes. After complete addition, the mixture was heated for one hour at 175° C. The resin had an EEW of approximately 650 and an ICI cone plate viscosity of 300 cps at 200° C.

EXAMPLE 17 (50 PERCENT STYRENE BY PREREACTING STABILIZER

500 g (2.78 equiv.) of a diglycidyl ether of bisphenol A was charged to a reaction vessel equipped with stirring, nitrogen purge, condenser, and a temperature controller. With stirring and nitrogen purge on, the liquid resin was heated to 150° C. With 600 g (5.77 equiv.) styrene and 12 g tert-butylperbenzoate in one addition funnel and 6.0 g (0.0833 mole) acrylic acid in another funnel, the addition of both was started simultaneously at a rate of 0.6 g/minute. (This was also accomplished by adding 6.0 g, 0.0833 mole, acrylic acid to 6.0 g of the styrene-tert-butylperbenzoate mixture and adding that mixture first at a rate of 1.2

g/min., then beginning the styrene and tert-butylperbenzoate monomer feed.) When the acrylic addition was complete, the remaining monomer feed was added over a period of 170 minutes at a rate of 3.6 g/min. After completing the addition, the reaction was held at 150° C for 1 hour. 135.7 g (1.19 equiv.) of bisphenol A was added. At 135° C, 0.83 g of a solution of 70 percent ethyltriphenylphosphonium acetate•acetic acid complex in methanol was added. After heating the contents to 150° C, the reaction was allowed to exotherm to approximately 180° C. After holding for one hour past the peak exotherm at 175° C, the resin had an EEW of 895.

EXAMPLE 18 (40 PERCENT STYRENE PREREACTED AND CONTINUOUS FEED COMBINATION)

A resin was prepared using the process in Example 17 except that 2 g of acrylic acid was prereacted as before along with a monomer feed containing a mixture of 400 g styrene and 10 g tert-butylperbenzoate and 2 g acrylic acid. The resulting resin had an EEW of 720 and an ICI plate cone viscosity of 380 cps at 200° C.

EXAMPLE 19 (50 PERCENT STYRENE WITH METHACRYLIC ACID AS STABILIZER, ADVANCEMENT FIRST)

Charge 500 g (2.78 equiv.) diglycidyl ether of bisphenol A and 166.7 g (1.462 equiv.) bisphenol A to a reaction vessel equipped with stirring, nitrogen purge, condenser, and a temperature controller. With nitrogen purge on, the liquid resin was heated to 85° C. 0.83 g of a 70 percent solution of ethyltriphenylphosphonium acetate•acetic acid complex in methanol was added. The contents were heated to 150° C over a period of 30 minutes. Once 150° C was reached, heating was stopped and the reaction allowed to exotherm. The reaction reached a peak exotherm of 195° C in 20 minutes. The reaction equilibrated at 150° C. Monomer feed of 600 g (5.77 mole) styrene, 47.4 g tert-butylperbenzoate and 7.2 g (0.0837 mole) methacrylic acid was added over 3.5 hours. The mixture was heated to 175° C after addition of the monomers was complete and held one hour at 175° C. The resin had an EEW of 1165 and an ICI cone plate viscosity of 560 cps at 200° C.

EXAMPLE 20 (40 PERCENT STYRENE WITH DIMETHACRYLATE STABILIZER)

37.5 g (2.06 equiv.) diglycidyl ether of bisphenol A was charged to a reaction vessel equipped with stirring, nitrogen purge, condenser, and a temperature controller. Monomer feed of 301.61 (2.88 mole) styrene, 9 g tert-butylperbenzoate and 16.06 g (0.02 equiv.) of a dimethacrylate ester of a 361 EEW diglycidyl ether of bisphenol A was added dropwise over one hour at 150° C. The reaction was allowed to digest for one hour. 101.8 g (0.893 equiv.) bisphenol A was then added. The temperature fell to 135° C, then 0.62 g of a 70 percent solution of ethyltriphenyl-phosphonium acetate•acetic acid complex in methanol was added. The reaction was heated to 150° C and the mixture was allowed to exotherm. After the exotherm at 185° C, the reaction was allowed to cool to 175° C and digested for one hour. The resin had an EEW of 656 and an ICI plate cone viscosity of 300 cps at 200° C.

EXAMPLE 21 (40 PERCENT STYRENE/2-ETHYLHEXYLACRYLATE WITH METHACRYLIC ACID STABILIZER)

To a reaction vessel equipped with a nitrogen purge, a condenser, a stirrer, and a temperature controller 500 g (2.66 equiv.) of the diglycidyl ether of bisphenol A were added and heated to 150° C. Then a solution containing 5.0 g (0.0581 mole) methacrylic acid, 9.7 g (0.093 mole) styrene, and 0.30 g tert-butylperbenzoate was added dropwise over a 10 minute period. Then a mixture of 392.9 g (3.778 mole) styrene, 21.1 g (0.184 mole) 2-ethylhexylacrylate and 12.4 g tert-butylperbenzoate was added over a period of 60 minutes. The reaction was allowed to digest for an additional 60 minutes. Then 135.7 g (1.19 equiv.) bisphenol A and 0.83 g of a 70 percent solution of ethyltriphenyl-phosphonium acetate•acetic acid complex in methanol was added and the reaction mixture was heated to 150° C, allowed to exotherm, and then held at 175° C for one hour. The resultant product had an EEW of 721 and an ICI plate cone viscosity at 200° C of 340 cps.

EXAMPLE 22 (40 PERCENT STYRENE/n-BUTYLACRYLATE WITH METHACRYLIC ACID STABILIZER)

To a reaction vessel equipped with a nitrogen purge, a condenser, a stirrer, and a temperature controller 500 g (2.66 equiv.) of the diglycidyl ether of bisphenol A were added and heated to 150 °C. Then a solution containing 5.0 g (0.0581 mole) methacrylic acid, 9.7 g (0.093 mole) styrene, and 0.30 g tert-butylperbenzoate was added dropwise over a 10 minute period. Then a mixture of 392.9 g (3.778 mole) styrene, 21.1 g (0.164 mole) n-butylacrylate and 12.4 g tert-butylperbenzoate was added over a period of 60 minutes. The reaction was allowed to digest for an additional 60 minutes. Then 135.7 g (1.19 equiv.) bisphenol A and 0.83 g of a 70 percent solution of ethyltriphenyl-phosphonium acetate•acetic acid complex in methanol was added and the reaction mixture was heated to 150 °C, allowed to exotherm, and then held at 175 °C for one hour. The resultant product had an EEW of 718 and an ICI plate cone viscosity at 200 °C of 340 cps.

EXAMPLE 23 (50 PERCENT STYRENE/HYDROXYETHYL ACRYLATE; ADVANCED RESIN FIRST)

To a two-liter reaction vessel equipped with stirring, nitrogen purge, condenser, and a temperature controller, was added 500 g (2.78 equiv.) of a diglycidyl ether of bisphenol A having an average EEW of 180 and 166.7 (1.46 equiv.) of bisphenol A. The temperature was raised to 80 °C over a period of 15 minutes and 0.83 g of a 70 percent solution of ethyltriphenylphosphonium acetate•acetic acid complex in methanol was added. The reaction mixture was heated to 150 °C, after which it exothermed to a temperature of 210 °C. The reaction mixture was then allowed to cool to 150 °C after which a mixture of 600 g (5.77 mole) styrene, 71.8 g (0.62 mole) 2-hydroxyethylacrylate, and 47.4 g (0.244 mole) tert-butylperbenzoate was added over a period of 5 hours at a rate of 2.5 ml/min. After completion of the monomer addition, the temperature was held at 175 °C for one hour. The resultant product had an ICI plate cone viscosity of 680 cps at 200 °C and had an overall average EEW of 1202.

**Claims**

1. An advanced epoxy resin composition which contains an in situ prepared addition polymer resulting from

(I) polymerizing at least one polymerizable ethylenically unsaturated monomer free of groups reactive with an epoxide group in at least one epoxy resin having an average of more than one vicinal epoxide group per molecule and an average epoxide equivalent weight of not greater than 400, in the presence of

(A)at least one free radical polymerization catalyst selected from

(1) one or more peroxide compounds in an amount of not greater than the equivalent of 2.75 percent by weight of benzoyl peroxide based on the weight of the polymerizable monomer or combination of monomers; or

(2) one or more azo compounds in an amount of from 0.1 to 10 percent by weight based on the weight of the polymerizable monomer or combination of monomers; and

(II) reacting the resultant composition with a of Claim 1 compound having an average of more than one phenolic hydroxyl group per molecule in a quantity which provides an epoxy:hydroxyl ratio of from 1.2:1 to 2.5:1 so as to provide a resultant advanced epoxy resin containing an addition polymer.

2. An advanced epoxy resin composition of Claim 1 wherein the polymerization is conducted in the presence of a stabilizer which is selected from

(1) a compound which contains both a group reactive with an epoxy group and a polymerizable ethylenically unsaturated group in an amount of from 0.5 to not more than 7.5 percent by weight based upon the combined weight of said compound containing both a group reactive with an epoxy group and a polymerizable ethylenically unsaturated group and said polymerizable ethylenically unsaturated monomer free of groups reactive with an epoxide group; or

(2) an adduct of (a) a relatively low equivalent epoxy resin and (b) a compound which contains both a group reactive with a relatively low equivalent weight epoxy resin and a polymerizable ethylenically unsaturated group, components (a) and (b) being employed in an amount such that the ratio of epoxy groups contained in component (a) to groups reactive with an epoxy group contained in component (b) is from 1:1 to 100:1, said adduct being employed in an amount of from 0.5 to 20 percent by weight of said polymerizable ethylenically unsaturated monomer free of groups reactive with an epoxide group with the

proviso that the amount of compound containing both a polymerizable ethylenically unsaturated group and a group reactive with an epoxide group is not greater than 7.5 percent by weight based on the combined weight of such compound and any polymerizable monomer free of groups reactive with an epoxide group; and

(3) a mixture thereof.

3. An advanced epoxy resin composition of Claim 1 wherein said relatively low equivalent weight epoxy resin is selected from those represented by the following formulas I-III

(I)

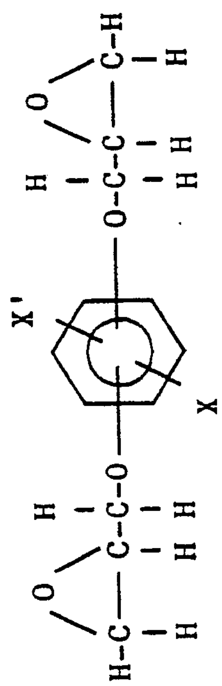

(II)

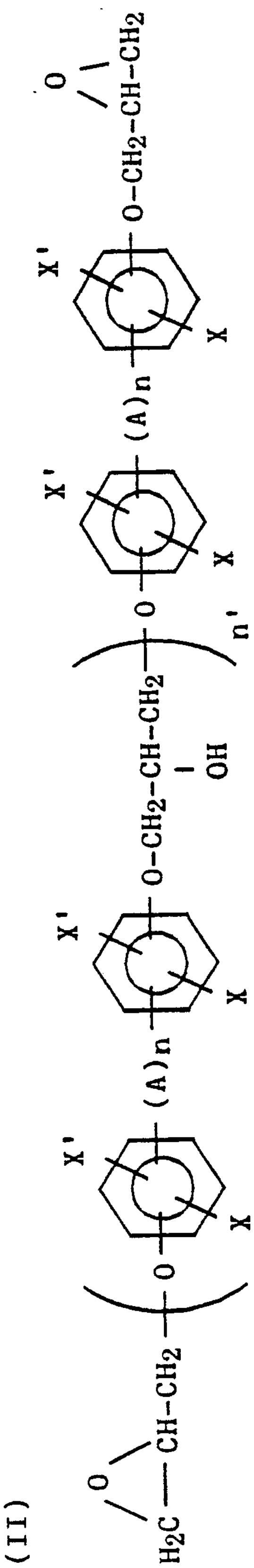

(III)

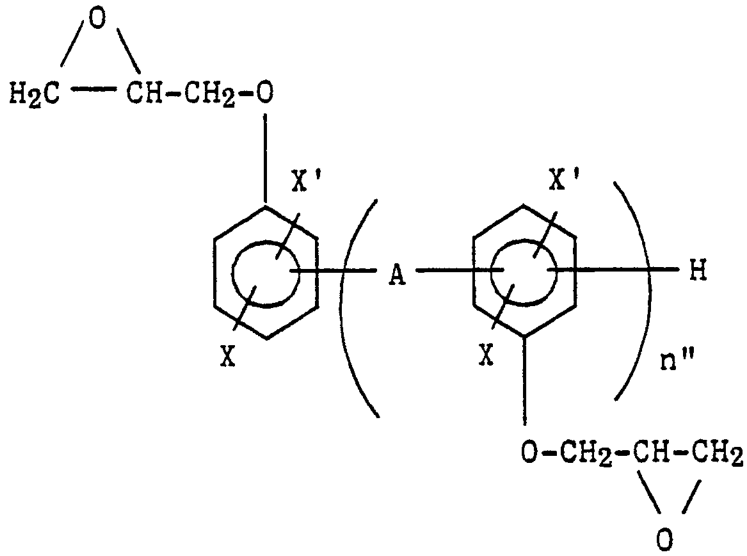

wherein A is a divalent hydrocarbon group having from one to 8 carbon atoms, -O-, -S-, -S-S-, -SO-, -$SO_2$-, or -CO-; each X and X′ is independently hydrogen, bromine, chlorine or a hydrocarbon group having from 1 to 8 carbon atoms; n has a value of zero or 1; n′ has an average value of up to 2, and n″ has a value of from 1.001 up to 2.5 and which value is sufficient that the resultant advanced product does not form a gel.

4. An advanced epoxy resin composition of Claim 1 wherein said compound having an average of more than one phenolic hydroxyl group per molecule is selected from those compounds represented by the following formulas IV-VI

(IV)

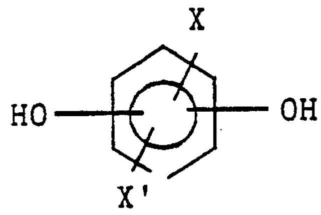

(V)

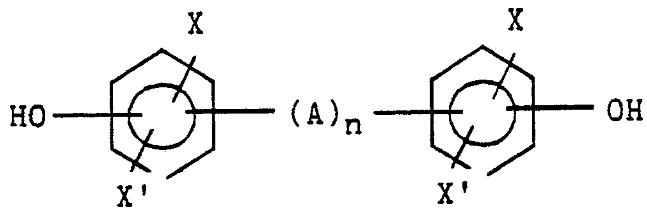

(VI)

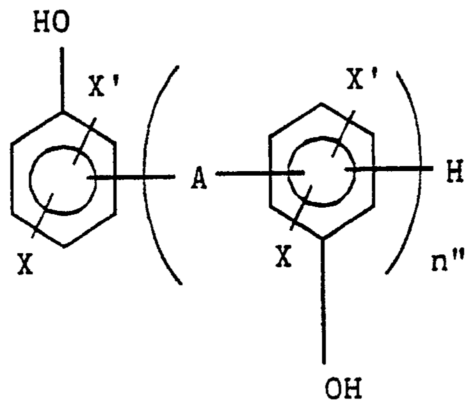

wherein A, X, X′, n and n″ are as defined above.

5. An advanced epoxy resin composition of Claim 1 wherein said polymerizable ethylenically unsaturated monomer is represented by the following formulas VII or VIII

(VII)

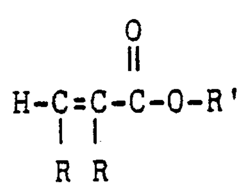

wherein each R is independently hydrogen or a hydrocarbyl group having from 1 to 20 carbon atoms and R′ is a hydrocaryl group having from 1 to 20 carbon atoms;

(VIII)

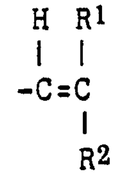

wherein $R^1$ is hydrogen, a halogen or a hydrocarbyl group having from 1 to 20 carbon atoms and $R^2$ is hydrogen, halogen or a hydrocarbyl group having from 1 to 20 carbon atoms or a hydrocarbyl group which contains a -C≡N group.

6. An advanced epoxy resin composition of Claim 2 wherein said stabilizer component is present in a quantity not greater than 10 percent by weight of said polymerizable ethylenically unsaturated monomer or mixture of monomers, said stabilizer component being selected from the group consisting of acrylic acid, methacrylic acid, cinnamic acid, hydroxyethyl acrylate, hydroxypropyl acrylate, vinyl phenol, isopropenyl phenol, maleic acid, glycidyl methacrylate, styryl glycidyl ether, mixed methacrylate esters of the diglycidyl ether of bisphenol A, carboxy terminated butadiene-acrylonitrile copolymers, acrylate or methacrylate esters of phenyl glycidyl ether or p-tertiarybutylphenyl glycidyl ether and mixtures thereof, with the proviso that the amount of compound containing both a polymerizable ethylenically unsaturated group and a group reactive with an epoxide group is not greater than 5 percent by weight based on the combined weight of such compound and any polymerizable monomer free of groups reactive with an epoxide group.

7. An advanced epoxy resin composition of Claim 3 wherein said polymerizable ethylenically unsaturated monomer free of groups reactive with an epoxide group is styrene, methyl methacrylate, butyl acrylate, 2-ethylhexyl acrylate, acrylonitrile, vinyl toluene, t-butyl styrene, or mixtures thereof.

8. A curable composition comprising the advanced epoxy resin of Claim 1 and a curing amount of a suitable curing agent therefor.

9. A process for preparing advanced epoxy resins containing addition polymer which process comprises

(I) polymerizing at least one polymerizable ethylenically unsaturated monomer free of groups reactive with an epoxide group in at least one relatively low equivalent weight epoxy resin having an average of more than one vicinal epoxide group per molecule and an average epoxide equivalent weight of not greater than 400, in the presence of

(A)at least one free radical polymerization catalyst selected from

(1) one or more peroxide compounds in an amount of not greater than the equivalent of 2.75 percent by weight of benzoyl peroxide based on the weight of the polymerizable monomer or combination of monomers; or

(2) one or more azo compounds in an amount of from 0.1 to 10 percent by weight based on the weight of the polymerizable monomer or combination of monomers; and

(II) reacting the resultant composition with a compound having an average of more than one phenolic hydroxyl group per molecule in a quantity which provides an epoxy:hydroxyl ratio of from 1.2:1 to 2.5:1 so as to provide a resultant advanced epoxy resin containing an addition polymer.